(19) Europäisches Patentamt
European Patent Office
Office européen des brevets

(11) Veröffentlichungsnummer: **0 364 741 B1**

(12) **EUROPÄISCHE PATENTSCHRIFT**

(45) Veröffentlichungstag der Patentschrift: **21.07.93**

(51) Int. Cl.5: **C08G 65/40**, C08J 5/18

(21) Anmeldenummer: **89117170.4**

(22) Anmeldetag: **16.09.89**

# (54) Aromatische Polyetherketone.

(30) Priorität: **01.10.88 DE 3833386**
**24.10.88 DE 3836169**

(43) Veröffentlichungstag der Anmeldung:
**25.04.90 Patentblatt 90/17**

(45) Bekanntmachung des Hinweises auf die Patenterteilung:
**21.07.93 Patentblatt 93/29**

(84) Benannte Vertragsstaaten:
**BE CH DE ES FR GB IT LI NL**

(56) Entgegenhaltungen:
**EP-A- 0 135 938**
**EP-A- 0 157 732**
**EP-A- 0 301 409**
**US-A- 4 010 147**

(73) Patentinhaber: **BAYER AG**

**W-5090 Leverkusen 1 Bayerwerk(DE)**

(72) Erfinder: **Reuter, Knud, Dr.**
**Scheiblerstrasse 99**
**W-4150 Krefeld(DE)**
Erfinder: **Freitag, Dieter, Dr.**
**Hasenheide 10**
**W-4150 Krefeld(DE)**
Erfinder: **Weymans, Günther, Dr.**
**Karl-Arnold-Strasse 4**
**W-5090 leverkusen 1(DE)**
Erfinder: **Dhein, Rolf, Dr.**
**Deswatinesstrasse 30**
**W-4150 Krefeld 1(DE)**
Erfinder: **Meier, Erich, Dr.**
**Berta-von-Suttner-Strasse 19**
**W-5090 Leverkusen 1(DE)**
Erfinder: **Müller, Gerold, Dr.**
**Spechtweg 21**
**W-4150 Krefeld(DE)**

EP 0 364 741 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft aromatische Polyetherketone (und ein Verfahren zu ihrer Herstellung) auf Basis von Dihydroxydiphenylcycloalkanen der Formel (I)

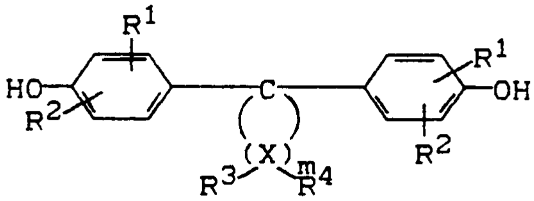

(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl und $C_7$-$C_{12}$-Aralkyl, bevorzugt Phenyl-$C_1$-$C_4$-alkyl-, insbesondere Benzyl und Cumyl |
| m | eine ganze Zahl von 4 bis 7, bevorzugt 4 oder 5, |
| $R^3$ und $R^4$ | für jedes X individuell wählbar, unabhängig voneinander Wasserstoff, $C_1$-$C_6$-Alkyl und |
| X | Kohlenstoff bedeuten, |
| | mit der Maßgabe, daß an mindestens einem Atom X $R^3$ und $R^4$ gleichzeitig Alkyl bedeuten. |

Die Erfindung betrifft ferner Folien aus Polyetherketonen einschließlich Verbundfolien mit anderen Kunststoff-Folien.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkyl-substituiert, dagegen ist die Alkyl-disubstitution in $\beta$-Stellung zu C-1 bevorzugt.

Besonders bevorzugt ist die Alkyldisubstitution in $\beta$-Stellung und die andere $\beta$-Stellung mono-alkylsubstituiert.

Besonders bevorzugt als Ausgangsmaterial sind Dihydroxydiphenylcycloalkane mit 5 und 6 Ring-C-Atomen im cycloaliphatischen Rest [m = 4 oder 5 in Formel (I)] wie beispielsweise die Diphenole der Formeln

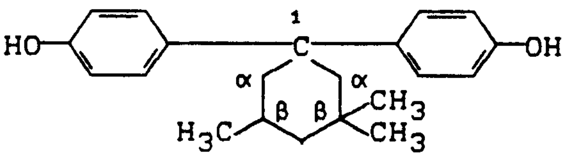

(II)

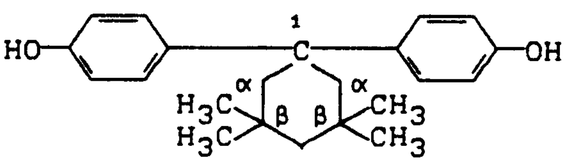

(III) und

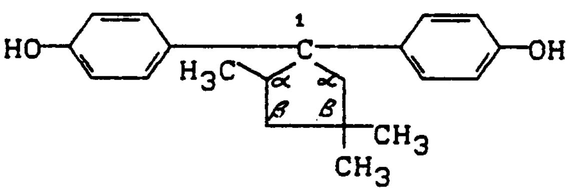

(IV),

wobei das 1,1-Bis-(4-hydroxyphenyl)-3,3,5-trimethylcyclohexan (Formel II) besonders bevorzugt ist.

Dihydroxydiphenylcycloalkane der Formel (I) können in an sich bekannter Weise durch Kondensation von Phenolen der Formel (V)

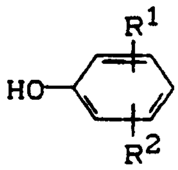

(V)

und Ketonen der Formel (VI)

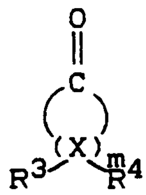

(VI)

hergestellt werden, wobei in den Formeln (V) und (VI) X, $R^1$, $R^2$, $R^3$, $R^4$ und m die für Formel (I) angegebene Bedeutung haben.

Die Phenole der Formel (V) sind entweder literaturbekannt oder nach literaturbekannten Verfahren erhältlich (vgl. z.B. Ullmann, Encyklopädie der technischen Chemie, 4. Auflage, Band 15, S. 61-77).

Beispiele für geeignete Phenole der Formel (V) sind:
Phenol, o-Kresol, m-Kresol, 2,6-Dimethylphenol, 2-Chlorphenol, 3-Chlorphenol, 2,6-Dichlorphenol, 2-Cyclohexylphenol, Diphenylphenol, o-Phenylphenol und o- oder p-Benzylphenole,
Die Ketone der Formel (VI) sind literaturbekannt (siehe beispielsweise Beilsteins Handbuch der organischen Chemie, 4. Auflage, Band 7; ein allgemeines Verfahren zur Herstellung von Ketonen der Formel (VI) ist beispielsweise in "Organikum", 15. Auflage 1977, VEB-Deutscher Verlag der Wissenschaften, Berlin, S. 698, beschrieben.

Beispiele für bekannte Ketone der Formel (VI) sind:
3,3-Dimethylcyclopentanon, 2,2-Dimethylcyclohexanon, 3,3-Dimethylcyclohexanon, 4,4-Dimethylcyclohexanon, 3-Ethyl-3-Methylcyclopentanon, 2,3,3-Trimethylcyclopentanon, 2,4,4-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trimethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon,3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone sind

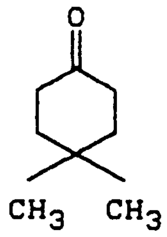

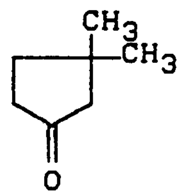

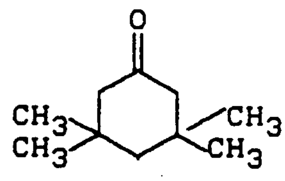

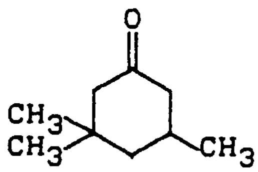

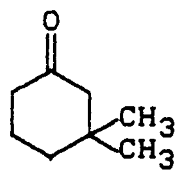

und

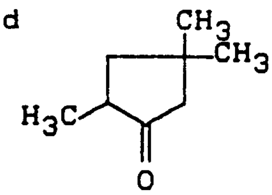

Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30 °C bis 300 °C, vorzugsweise von -15 °C bis 150 °C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise: Acetanhydrid, Zeolithe, Polyphosphorsäure und Phosphorpentoxid.

Die Herstellung der Diphenole entsprechend Formel (I), ist in DE-A- 3832396 beschrieben und wird durch das Beispiel 1 erläutert:

Gegenstand dieser Erfindung sind aromatische Polyetherketone mit der wiederkehrenden Struktureinheit

-O-E-O-E'- (VII)

worin

-E'- ein zweibindiger Rest eines aromatischen Ketons der Formel (VIIIa)

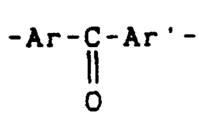 (VIIIa)

mit

Ar und Ar' gleiche oder verschiedene difunktionelle aromatische Reste mit 6 bis 50 C-Atomen

und worin

-O-E-O- (IXa)

ein zweibindiger Diphenolat-Rest ist, die dadurch gekennzeichnet sind, daß von 0,1 Mol% bis 100 Mol%, vorzugsweise von 3 Mol% bis 100 Mol% und insbesondere von 10 Mol% bis 100 Mol% der Diphenolat-Reste (IXa) solche der Formel (I a)

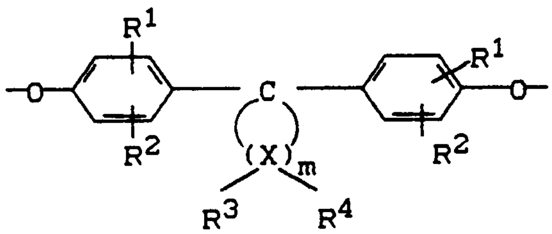

(I a)

sind, in denen X, $R^1$, $R^2$, $R^3$, $R^4$ und m wie in Formel (I) definiert sind.

Die aromatischen Polyetherketone der Erfindung haben bevorzugt mittlere Molekulargewichte $\overline{M}_w$ - (Gewichtsmittel), ermittelt, z. B. durch Gelpermeationschromatographie oder Lichtstreuung von 742 bis 500.000, vorzugsweise von 3.000 bis 200.000 und insbesondere von 5.000 bis 100.000.

Aromatische Polyetherketone sind bekannt (siehe beispielsweise GB-A- 1 078 234, US-A- 4 010 147 und EP-A-0 135 938). Sie können beispielsweise durch Umsetzung von Dialkalisalzen von Diphenolen mit Dihalogen-diarylketonen in einem polaren Lösungsmittel hergestellt werden, (siehe beispielsweise GB-A- 1 078 234), wobei die Dialkalisalze der Diphenole auch in situ erzeugt werden können.

Die erfindungsgemäßen Polyetherketone können ebenfalls nach dieser Methode hergestellt werden, wobei als polares Lösungsmittel bevorzugt am Stickstoff $C_1$-$C_5$-alkylsubstituiertes Caprolactam, wie N-Methyl-caprolactam, N-Ethyl-caprolactam, N-n-Propyl-caprolactam, N-Isopropyl-caprolactam, vorzugsweise N-Methyl-caprolactam, und vorzugsweise am Stickstoff $C_1$-$C_5$-alkylsubstituierte Pyrrolidone, wie N-Methylpyrrolidon, N,N-Dimethylform amid, N,N-Dimethylacetamid, Dimethylsulfoxid, Dimethylsulfon, Sulfolan und Tetramethylharnstoff eingesetzt werden. Es können anteilig, z. B. 0,1 bis 200 Gew.-%, bezogen auf das Gewicht des polaren Lösungsmittels, andere weniger polare Lösungsmittel mitverwendet werden, z.B. aromatische Kohlenwasserstoff, wie Toluol, Xylol, Mesitylen, Chlorbenzol oder aliphatische Kohlenwasserstoffe wie Benzine, Cyclohexan.

Gegenstand dieser Erfindung ist auch ein Verfahren zur Herstellung der erfindungsgemäßen Polyetherketone und der Struktureinheit (VII) durch Umsetzung von Dialkalidiphenolaten (IXb)

Alkali-O-E-O-Alkali (IX b)

mit

Dihalogen-diaryl-Ketonen (VIII)

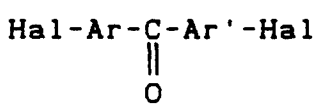

(VIII)

mit Ar und Ar′ = gleiche oder verschiedene difunktionelle, aromatische Reste mit 6 bis 50 C-Atomen und Hal, Halogen wie Fluor, Chlor, Brom, bevorzugt Fluor und Chlor

in Lösungsmitteln, das dadurch gekennzeichnet ist, daß von 0,1 Mol% bis 100 Mol% vorzugsweise von 3 Mol% bis 100 Mol und insbesondere von 10 Mol% bis 100 Mol% der Dialkalidiphenolate IXb der Formel Ib

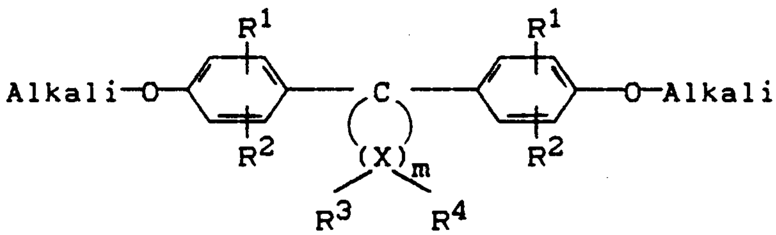

(I b)

entsprechen,
worin X, $R^1$, $R^2$,$R^3$, $R^4$ und m die für die Formel (I) genannte Bedeutung haben, und daß die Umsetzung in einem polaren Lösungsmittel wie N-alkylierten Caprolactamen oder N-alkylierten Pyrrolidonen, vorzugsweise in N-alkylierten Pyrrolidonen als polaren Lösungsmitteln durchgeführt wird.

Geeignete Diphenole der Formel (IX) sind z.B.
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α′-Bis(hydroxyphenyl)-diisopropylbenzole
sowie deren kernalkylierte und kernhalogenierte Verbindungen.

Diese und weitere geeignete andere Diphenole (IX) sind z.B. in den US-A- 3 028 365, 2 999 835, 3 148 172, 3 275 601, 2 991 273, 3 271 367, 3 062 781, 2 970 131 und 2 999 846, in DE-A-1 570 703, 2 063 050, 2 063 052, 2 211 0956, FR-B-1 561 518 und in der Monographie "H. Schnell, Chemistry and Physics of Polycarbonates, Interscience Publishers, New York 1964", beschrieben.

Bevorzugte andere Diphenole (IX) sind beispielsweise:
Hydrochinon,
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
4,4′-Dihydroxydiphenylsulfon.

Besonders bevorzugte andere Diphenole (IX) sind beispielsweise:
Hydrochinon,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
4,4′-Dihydroxydiphenylsulfon.

Sie können einzeln oder im Gemisch eingesetzt werden.

Die Formel IXa and IXb stellen die durch Entfernen von 2H-Atomen gebildeten Reste dieser Diphenole bzw. die Alkalisalze dieser Verbindung dar.

Geeignete Dihalogendiarylketone (VIII) sind:

4,4'-Dichlorbenzophenon
4-Chlor-4'-Fluorbenzophenon
4,4'-Difluorbenzophenon
4,4'-Dichlorterephthalophenon

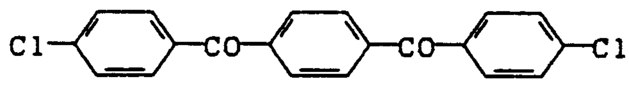

4,4'-Difluorterephthalophenon

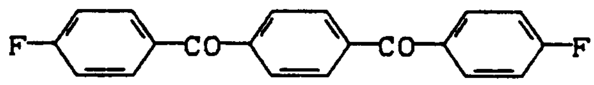

4,4'-Dichlorisophthalophenon

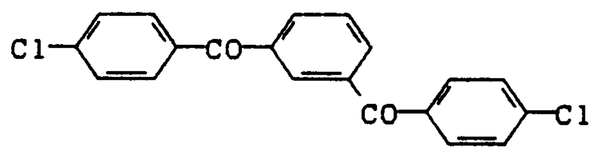

4,4'-Difluorisophthalophenon

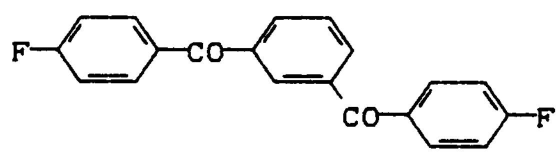

4,4'-Bis-(p-chlorbenzoyl)-diphenylether

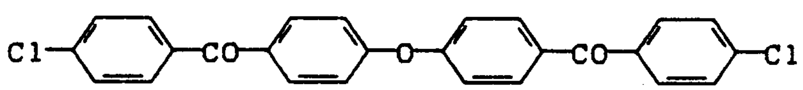

4,4'-Bis-(p-fluorbenzoyl)-diphenylether

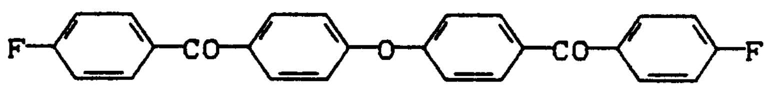

3,3'-Dinitro-4,4'-dichlorbenzophenon
3,3'-Dinitro-4,4'-difluorbenzophenon
4,4'-Bis-(p-chlorbenzoyl)-biphenyl

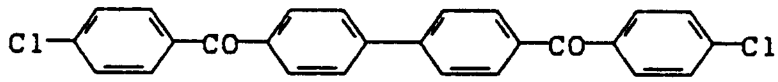

4,4'-Bis-(p-fluorbenzoyl)-biphenyl

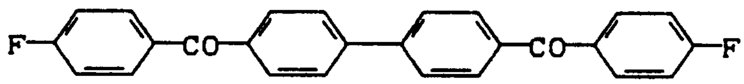

2,8-Bis-(p-chlorbenzoyl)-diphenylenoxid

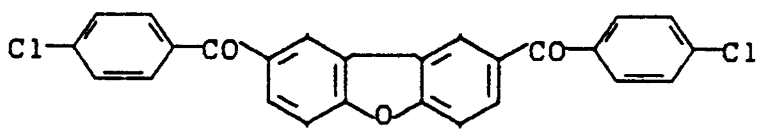

4,4'-Bis-(p-halogenbenzoyl)-diphenylmethan-derivate der Formel

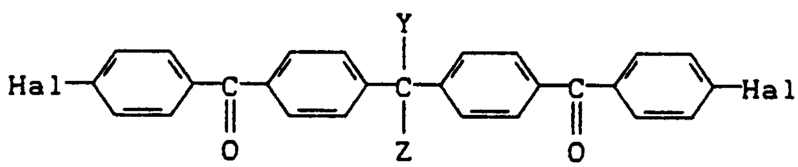

mit Y, Z als gleichen oder verschiedenen $C_1$-$C_9$-aliphatischen, $C_5$-$C_6$-cycloaliphatischen, $C_6$-$C_{10}$-aromatischen oder $C_7$-$C_{12}$ araliphatischen Resten oder Wasserstoff und Hal = Fluor oder Chlor, z. B.

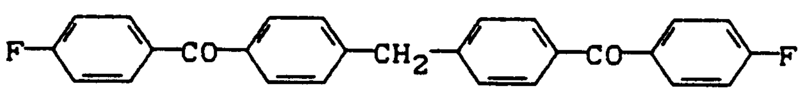

Der bevorzugte Rest Ar und Ar' in der Formel (VIII) ist somit der p-Phenylenrest, der auch substituiert sein kann, z.B. mit Alkyl oder Nitrogruppen substituierte p-Phenylenreste oder Reste der Formel

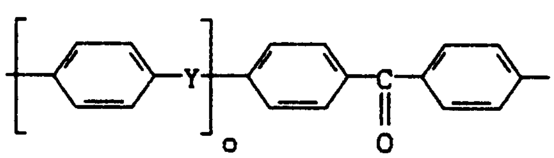

mit Y = -O-, $CH_2$, -CO-, Einfachbindung und $\sigma$ = 0 oder 1 und Hal = Fluor oder Chlor.

Als Alkali in den Dialkaliphenolaten (I b) und IX b) dient vorzugsweise Natrium oder Kalium.

Als Halogen in den Diahalogendiarylketonen (VIII) dient Fluor, Chlor und Brom, vorzugsweise Fluor und Chlor.

Bevorzugte, erfindungsgemäße Polyetherketone sind solche, die mindestens 10 Mol-% wiederkehrende Struktureinheiten der Formel

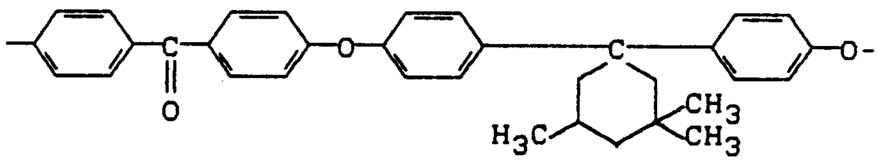

enthalten und ein Molekulargewicht von über 3000 g/mol aufweisen (Gewichtsmittel).

Erfindungsgemäß können die aromatischen Polyetherketone bei Temperaturen von 130 °C bis 350 °C, bevorzugt 145 °C bis 280 °C, und bei Drucken von 0,8 bis 10 bar, bevorzugt 1 bis 3 bar, insbesondere bei atmosphärischem Umgebungsdruck hergestellt werden.

Das molare Mengenverhältnis der Alkalidiphenolate (I b) und (IX b) zu den Dihalogen-diaryl-ketonen (VIII) liegt zwischen 0,5 und 2, bevorzugt zwischen 0,8 und 1,2, besonders bevorzugt zwischen 0,95 und 1,05, wobei für hohe Molekulargewichte ein Verhältnis von 1 oder sehr nahe bei 1 gewählt werden muß.

Die Menge an polaren Lösungsmitteln beträgt 0,5 bis 50, bevorzugt 2 bis 20 Gewichtsteile, bezogen auf das Gesamtgewicht der Polyetherketonrohstoffe (I), (VIII) und (IX) = 1 Gew.-Teil.

Die erfindungsgemäßen Polyetherketone können z. B. wie folgt aus den erhaltenen Reaktionsgemischen gewonnen werden:

Man verdünnt das Reaktionsgemisch, insbesondere wenn sehr hochviskose Lösungen vorliegen, z. B. mit dem polaren Reaktions-Lösungsmittel oder einem anderen Lösungsmittel für das Polyetherketon, und filtriert. Nach Neutralisation des Filtrats mit einer geeigneten Säure, z. B. Essigsäure, wird das Polyetherketon durch Eingießen in ein geeignetes Fällungsmedium, z. B. Wasser oder Alkohole, wie z. B. Methanol oder Isopropanol oder Wasser-Alkohol-Gemische, z. B. $H_2O$/Methanol 1 : 1, ausgefällt, isoliert und anschließend getrocknet.

Die erfindungsgemäßen Polyetherketone sind thermoplastische Kunststoffe mit hoher Wärmeformbeständigkeit.

Sie können beispielsweise verarbeitet werden durch Extrusion, Spritzgießen, Sintern oder Verpressen.

Es können beliebige Formkörper hergestellt werden. Diese sind überall dort einsetzbar, wo Polyetherketone hoher Formstabilität gefordert sind, also beispielsweise auf dem Gebiet der Elektrotechnik und Elektronik, Fahrzeugbau incl. Luft- und Raumfahrt, für Sportgeräte, Funktionsteile und Geschirr, für Mikrowellenherde, sterilisierbare medizinische Geräte, Kaffeemaschinenteile, Eierkocher, Heißwasserbehälter, -leitungen und -pumpen, Haartrockner und ähnliches mehr.

Den erfindungsgemäßen Polyetherketonen können noch übliche Additive wie Weichmacher, Entformungsmittel, Stabilisatoren wie z. B. UV-Absorber und Antioxidantien, Intumeszenzhilfsmittel (Flammschutzmittel), Verstärkungsfasern wie Glasfasern, Kohlenstoffasern oder Aramidfasern, Füllstoffe, anorganische oder organische Pigmente, keramische Grundstoffe, Ruß etc. zugesetzt werden, bevorzugt in Mengen von 0 bis 80 Gew.-%, insbesondere von 0 bis 60 Gew.-%, bezogen auf Polyetherketon = 100 %, zweckmäßig vor der Verarbeitung der erfindungsgemäßen Polyetherketone zu Formkörpern.

Die niedermolekularen erfindungsgemäßen Polyetherketone eignen sich über ihre funktionellen Endgruppen (Halogen oder Hydroxl) besonders für den Einbau in Blockcopolymere in Verbindung mit anderen co-kondensierbaren Bausteinen.

Aus den erfindungsgemäßen Polyetherketonen können erfindungsgemäß Folien einer Dicke von 1 bis 1500 µm, bevorzugt 2 bis 700 µm, hergestellt werden..

Die erhaltenen Folien können in an sich bekannter Weise monoaxial oder biaxial gereckt werden, bevorzugt im Verhältnis 1 : 1.5 bis 1 : 5.

Die Folien können nach den bekannten Verfahren zur Folienerzeugung hergestellt werden, z.B. durch Extrusion einer Polymerschmelze durch eine Breitschlitzdüse, durch Blasen auf einer Folienblasmaschine, Tiefziehen oder Gießen. Dabei vergießt man eine konzentrierte Lösung des Polymeren in einem geeigneten Lösungsmittel auf eine ebene Unterlage, verdampft das Lösungsmittel und hebt die gebildete Folie von der Unterlage ab.

Die Folien können in an sich bekannter Weise bei Temperaturen zwischen Zimmertemperatur und dem Erweichungspunkt der Folien auf bekannten Vorrichtungen verstreckt werden.

Die erfindungsgemäßen Folien haben eine besonders hohe Wärmeformbeständigkeit und sind für viele Gase durchlässig. Sie können daher vorteilhaft als Membrane für die Gaspermeation verwendet werden.

Dabei ist es möglich, diese Folien für sich allein zu verwenden.

Man kann mit ihnen natürlich auch Verbundfolien mit anderen Kunststoff-Folien herstellen, wobei prinzipiell alle bekannten Folien als Partner infrage kommen.

Im Folgenden sind Materialien angegeben, die mit den erfindungsgemäßen Folien kombinierbare Folien liefern. Diese Materialien sind auch als Komponenten (b) benannt.

Als Komponente (b) geeignete Thermoplasten sind sowohl

b1) amorphe Thermoplaste, vorzugsweise solche mit einer Glastemperatur von mehr als 40 °C, insbesondere von 60 °C bis 220 °C, als auch

b2) teilkristalline Thermoplaste, vorzugsweise solche mit einer Schmelztemperatur von mehr als 60 °C, insbesondere von 80 °C bis 400 °C.

Elastomere für die Komponenten b) sind

b3) solche Polymere, die eine Glastemperatur von unter 0 °C, vorzugsweise von unter -10 °C und insbesondere von -15 °C bis -140 °C, haben.

Beispiele für amorphe Thermoplasten b1) sind amorphe Polymere aus der Klasse der Polycarbonate, Polyamide, Polyolefine, Polysulfone, Polyketone, thermoplastische Vinylpolymerisate wie Polymethylacrylsäureester oder Homopolymerisate von Vinylaromaten, Copolymerisate von Vinylaromaten oder Pfropfpolymerisate von Vinylmonomeren auf Kautschuke, Polyether, Polyimide, thermoplastische Polyurethane, aromatische Polyester(carbonate) und flüssigkristalline Polymere.

Beispiele für kristalline Thermoplasten b2) sind aliphatische Polyester, Polyarylensulfide sowie die teilkristallinen Vertreter der vorstehend unter b1) subsummierten Thermoplasten.

Beispiele für Elastomer b3) sind die verschiedensten Kautschuke wie Ethylen-Propylen-Kautschuk, Polyisopren, Polychloropren, Polysiloxane, ataktisches Polypropylen, Dien-, Olefin- und Acrylatkautschuke und Naturkautschuke, Styrol-Butadien-Blockcopolymere, Ethylen-Copolymerisate mit Vinylacetat oder mit (Meth)acrylsäureestern, elastische Polyurethane soweit nicht als Thermoplasten unter b1) oder b2) subsumiert und elastische Polycarbonat-Polyether-Blockcopolymere.

Amorphe Thermoplasten $b_1$) sind insbesondere Polycarbonate, auch die von DE-A- 3832396. Polycarbonate können sowohl Homopolycarbonate als auch Copolycarbonate sein, sie können sowohl linear als auch verzweigt sein. Besonders bevorzugtes Bisphenol für die thermoplastischen Polycarbonate der Komponente b) der erfindungsgemäßen Mischungen ist Bisphenol-A [ = 2,2-Bis-(4-hydroxyphenyl)-propan].

Diese anderen thermoplastischen Polycarbonate sind bekannt.

Die Molekulargewichte $\overline{M}w$ (Gewichtsmittelmolekulargewicht, ermittelt nach der Gelpermeationschromatographie in Tetrahydrofuran) der thermoplastischen Polycarbonate liegen zwischen 10.000 und 300.000, vorzugsweise zwischen 12.000 und 150.000.

Die thermoplastischen Polycarbonate sind sowohl allein als auch im Gemisch für die Komponente b) der erfindungsgemäßen Mischungen verwendbar.

Bevorzugte andere Thermoplasten (b) sind auch aliphatische, thermoplastische Polyester, besonders bevorzugt Polyalkylenterephthalate, also beispielsweise solche auf Basis von Ethylenglykol, Propandiol-1,3, Butandiol-1,4, Hexandiol-1,6 und 1,4-Bis-hydroxymethylcyclohexan.

Die Molekulargewichte ($\overline{M}w$) dieser Polyalkylenterephthalate liegen zwischen 10.000 und 80.000. Die Polyalkylenterephthalate können nach bekannten Verfahren beispielsweise aus Terephthalsäuredialkylester und dem entsprechenden Diol durch Umesterung erhalten werden (s. z. B. US-A- 2 647 885, 2 643 989, 2 534 028, 2 578 660, 2 742 494, 2 901 466).

Diese Polyester sind bekannt. Weiterhin bevorzugte andere Thermoplasten sind thermoplastische Polyamide.

Es eignen sich alle teilkristallinen Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise Adipinsäure beziehungsweise Caprolactam aus Terephthalsäure und/oder Isophthalsäure und/oder Korksäure und/oder Sebacinsäure und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin bestehen und deren Zusammensetzungen im Prinzip aus dem Stand der Technik bekannt sind (siehe beispielsweise Encyclopedia of Polymers, Vol. 11, S. 315 ff).

Außerdem sind geeignet teilkristalline Polyamide, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide sind Polyamid-6 und Polyamid-6,6 oder Copolyamide mit geringem Anteil, bis etwa 10 Gewichtsprozent an anderen Co-Komponenten.

Geeignete Polyamide sind auch amorphe Polyamide, erhalten beispielsweise durch Polykondensation von Diaminen, wie beispielsweise von Hexamethylendiaminen, Decamethylendiamin, 2,2,4- beziehungsweise 2,4,4-Trimethylhexamethylendiamin, m- beziehungsweise p-Xylylendiamin, Bis-(4-aminocyclohexyl)-methan, Gemischen aus 4,4'- und 2,2'-Diaminodicyclohexylmethanen, 2,2-Bis-(4-aminocyclohexyl)-propan, 3,3'-Dimethyl-4,4'-diamino-dicyclohexylmethan, 3-Aminoethyl-3,5,5-trimethyl-cyclohexylamin, 2,5-Bis-(aminomethyl)-norbornan, 2,6-Bis-(aminomethyl)-norbornan, 1,4-Diamino-methylcyclohexan und von beliebigen Gemischen dieser Diamine, mit Dicarbonsäuren wie beispielsweise mit Oxalsäure, Adipinsäure, Azelainsäure, Decandicarbonsäure, Heptadecandicarbonsäure, 2,2,4-Trimethyladipinsäure, 2,4,4-Trimethyladipinsäure, Isophthalsäure und Terephthalsäure und mit beliebigen Gemischen dieser Dicarbonsäuren. Es sind somit auch amorphe Copolyamide einbezogen, die durch Polykondensation mehrerer der vorstehend genannten Diamine und/oder Dicarbonsäuren erhalten werden.

Ferner sind amorphe Copolyamide einbezogen, die unter Mitverwendung von ω-Aminocarbonsäuren wie ω-Aminocapronsäure, ω-Aminoundecansäure oder ω-Aminolaurinsäure oder von deren Lactamen hergestellt sind.

Besonders geeignete, amorphe, thermoplastische Polyamide sind solche, die aus Isophthalsäure, Hexamethylendiamin und weiteren Diaminen wie 4,4'-Diaminodicyclohexylmethan, Isophorondiamin, 2,2,4- beziehungsweise 2,4,4-Trimethylhexamethylendiamin, 2,5- und/oder 2,6-Bis-(aminomethyl)-norbornan erhältlich sind, solche, die aus Isophthalsäure, 4,4'-Diamino-di-cyclohexylmethan und ω-Caprolactam erhältlich sind, solche, die aus Isophthalsäure, 3,3-Dimethyl-4,4'-diamino-dicyclohexylmethan und ω-Laurinlactam erhältlich sind, und solche, die aus Terephthalsäure und dem Isomerengemisch aus 2,2,4- und 2,4,4-Trimethylhexamethylendiamin erhältlich sind.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diaminoisomeren
1 bis 30 Mol-% des 2,4'-Diaminoisomeren
0 bis 2 Mol-% des 2,2'-Diaminoisomeren

und gegebenenfalls entsprechend höherkondensierten Diaminen, die durch Hydrierung von Diaminodiphenylmethan technischer Qualität erhalten werden.

Geeignete thermoplastische Polyamide können auch aus Mischungen von teilkristallinen und amorphen Polyamiden bestehen, wobei vorzugsweise der Anteil an amorphem Polyamid unter dem Anteil an teilkristallinem Polyamid liegt. Auch die amorphen Polyamide und deren Herstellung sind aus dem Stand der Technik bekannt (siehe beispielsweise Ullmann, Enzyklopädie d. technischen Chemie, Band 19, S. 50).

Bevorzugte andere Thermoplasten b) sind auch thermoplastische lineare oder verzweigte Polyarylensulfide. Sie haben Struktureinheiten der allgemeinen Formel

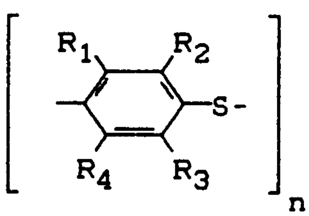

wobei $R_1$ bis $R_4$ unabhängig oder gleich sein können und $C_1$-$C_6$-Alkyl, Phenyl oder Wasserstoff sind. Weiterhin können die Polyarylensulfide auch Diphenyl-Einheiten enthalten.

Polyarylensulfide und ihre Herstellung sind bekannt (siehe beispielsweise US-A- 33 54 129 und EP-A-0 171 021).

Bevorzugte andere Thermoplasten b) sind thermoplastische Polyarylensulfone.

Geeignete Polyarylensulfone haben mittlere Gewichtsmittelmolekulargewichte $\overline{M}w$ (gemessen nach der Lichtstreumethode in $CHCl_3$) zwischen 1.000 und 200.000, vorzugsweise zwischen 20.000 und 60.000.

Beispiele dafür sind die nach bekannten Verfahren erhältlichen Polyarylensulfone aus 4,4'-Dichlordiphenylsulfon und einem Bisphenol, insbesondere 2,2-Bis-(4-hydroxyphenyl)-propan, mit mittleren Gewichtsmittelmolekulargewichten $\overline{M}w$ von 2.000 bis 200.000.

Diese Polyarylensulfone sind bekannt (siehe beispielsweise US-A- 3 264 536, DE-A- 1 794 171, GB-A- 1 264 900, US-A- 3 641 207, EP-A-00 38 028, DE-A- 3 601 419 und DE-A- 3 601 420). Die geeigneten Polyarylensulfone können auch in bekannter Weise verzweigt sein (siehe beispielsweise DE-A- 2 305 413).

Bevorzugte andere Thermoplasten b) sind auch thermoplastische Polyphenylenoxide, vorzugsweise Poly-(2,6-dialkyl-1,4-phenylenoxide). Erfindungsgemäß geeignete Polyphenylenoxide haben Gewichtsmittelmolekulargewichte $\overline{M}w$ (gemessen nach der Lichtstreumethode in Chloroform) zwischen 2.000 und 100.000, vorzugsweise zwischen 20.000 und 60.000. Diese Polyphenylenoxide sind bekannt.

Die bevorzugten Poly-(2,6-di-alkyl-1,4-phenylenoxide) können nach bekannten Verfahren durch oxidierende Kondensation von 2,6-Dialkylphenolen mit Sauerstoff in Anwesenheit von Katalysatorkombinationen aus Kupfersalzen und tertiären Aminen erhalten werden (siehe beispielsweise DE-A- 2 126 434 und US-A- 3 306 875).

Geeignete Poly-(2,6-dialkyl-1,4-phenylenoxide) sind insbesondere die Poly-[2,6-di($C_1$-$C_4$-alkyl)-1,4-phenylenoxide] wie beispielsweise Poly-(2,6-dimethyl-1,4-phenylenoxid).

Bevorzugte andere Thermoplasten b) sind auch aromatische Polyetherketone selbst (siehe beispielsweise GB-A-1 078 234, US-A- 4 010 147 und EP-A- 0 135 938), außer denen auf Basis von Diphenolen der Formel I.

Sie enthalten das wiederkehrende Strukturelement

-O-E-O-E′-,

worin -E′- der zweibindige Rest eines Bisarylketons und -O-E-O- ein zweibindiger Diphenolat-Rest ist.

Sie können beispielsweise gemäß GB-A- 1 078 234 aus Dialkalidiphenolaten der Formel Alkali-O-E-O-Alkali und Bis-(halogenaryl)-ketonen der Formel Hal-E′-Hal (mit Hal = Halogen) hergestellt werden. Ein geeignetes Dialkalidiphenolat ist z. B. das des 2,2-Bis-(4-hydroxyphenyl)-propans, ein geeignetes Bis-(halogenaryl)-keton ist das 4,4′-Dichlorbenzophenon.

Bevorzugte andere Thermoplasten b) sind auch thermoplastische Vinyl-Polymerisate.

Vinyl-Polymerisate im Sinne dieser Erfindung sind Homopolymerisate von Vinylverbindungen, Copolymerisate von Vinylverbindungen und Pfropfpolymerisate von Vinylverbindungen auf Kautschuke.

Erfindungsgemäß geeignete Homopolymerisate und Copolymerisate sind solche von Styrol, $\alpha$-Methylstyrol, Acrylnitril, Methacrylnitril, $C_1$-$C_{12}$-(Cyclo)-Alkyl-Estern der (Meth)Acrylsäure, $C_1$-$C_4$-Carbonsäure-Vinylester, wobei die Copolymerisate aus Mischungen dieser Vinyl-Verbindungen nach bekannten Methoden erhältlich sind.

Die Homo- beziehungsweise Copolymerisate sollen Grenzviskositäten (Staudinger-Indices) zwischen 0,3 und 1,5 dl/g (gemessen bei 23 °C in Toluol in bekannter Weise) haben.

Geeignete Vinylpolymerisate sind beispielsweise thermoplastische Poly-$C_1$-$C_4$-alkylmethacrylate, beispielsweise solche des Methyl-, Ethyl-, Propyl- oder Butylmethacrylsäureesters, vorzugsweise des Methyl- oder Ethyl-methacrylsäureesters. Es sind sowohl Homopolymerisate als auch Copolymerisate dieser Methacrylsäureester darunter zu verstehen. Darüber hinaus können andere, ethylenisch ungesättigte copolymerisierbare Monomere wie beispielsweise (Meth)Acrylnitril, ($\alpha$-Methyl)-Styrol, Bromstyrol, Vinylacetat, Acrylsäure- $C_1$-$C_8$-alkylester, (Meth)Acrylsäure, Ethylen, Propylen und N-Vinylpyrrolidon in untergeordneten Mengen einpolymerisiert sein.

Die erfindungsgemäß geeigneten thermoplastischen Poly-$C_1$-$C_4$-alkyl-methacrylate sind literaturbekannt oder nach literaturbekannten Verfahren erhältlich.

Geeignete Vinylpolymerisate sind auch Copolymerisate aus Styrol oder $\alpha$-Methylstyrol und Acrylnitril, die gegebenenfalls bis zu 40 Gew.-% Ester der Acrylsäure oder Methacrylsäure, insbesondere Methylmethacrylat oder n-Butylacrylat enthalten. Styrolderivate müssen auf jeden Fall als Monomere enthalten sein. Die Styrolderivate sind dabei in Anteilen zwischen 100 und 10 Gew.-%, bevorzugt zwischen 90 bis 20 Gew.-%, besonders bevorzugt zwischen 80 bis 30 Gew.-%, enthalten, die nach üblichen Verfahren wie radikalische Polymerisation in Masse, Lösung, Suspension oder Emulsion, bevorzugt aber durch radikalische Emulsionspolymerisation in Wasser erhalten werden.

Geeignete Pfropfpolymerisate entstehen durch Polymerisation der oben genannten Vinylmonomeren oder Vinylmonomerengemische in Gegenwart von Kautschuken mit Glastemperaturen $< 0$ °C, vorzugsweise $< -20$ °C. Die Pfropfpolymerisate enthalten in der Regel 1 bis 85 Gew.-%, bevorzugt 10 bis 80 Gew.-%, Kautschuk. Die Pfropfpolymerisate lassen sich durch übliche Verfahren in Lösung, Masse oder Emulsion, bevorzugt in Emulsion, herstellen, wobei Vinylmonomerengemische simultan oder sukzessive pfropfpolymerisiert werden können.

Geeignete Kautschuke sind vorzugsweise Dienkautschuke und Acrylatkautschuke.

Dienkautschuke sind beispielsweise Polybutadien, Polyisopren und Copolymerisate von Butadien mit bis zu 35 Gew.-% Comonomeren wie Styrol, Acrylnitril, Methylmethacrylat und $C_1$-$C_6$-Alkylacrylaten.

Acrylatkautschuke sind beispielsweise vernetzte, teilchenförmige Emulsionspolymerisate aus $C_1$-$C_6$-Alkylacrylaten, insbesondere $C_2$-$C_6$-Alkylacrylaten, gegebenenfalls im Gemisch mit bis zu 15 Gew.-% anderen, ungesättigten Monomeren wie Styrol, Methylmethacrylat, Butadien, Vinylmethylether, Acrylnitril, und aus wenigstens einem polyfunktionellem Vernetzer wie beispielsweise Divinylbenzol, Glykol-bis-acrylate, Bisacrylamide, Phosphorsäuretriallylester, Zitronensäuretriallylester, Allylester von Acrylsäure und Methacrylsäure, Triallylisocyanurat, wobei die Acrylatkautschuke bis zu 4 Gew.-% der vernetzenden Comonomere enthalten können.

Zur Herstellung der Pfropfpolymerisate sind auch Gemische von Dien- mit Acrylatkautschuken sowie Kautschuke mit einer Kern-Mantel-Struktur geeignet.

Die Kautschuke müssen zur Pfropfpolymerisation in Form diskreter Teile vorliegen, z. B. als Latex. Diese Teilchen haben i.a. mittlere Durchmesser von 10 nm bis 2.000 nm.

Die Pfropfpolymerisate können nach bekannten Verfahren, beispielsweise durch radikalische Emulsionspfropfpolymerisation der Vinylmonomeren in Gegenwart von Kautschuklatices bei Temperaturen von 50 bis 90 °C unter Verwendung wasserlöslicher Initiatoren wie Peroxodisulfat oder mit Hilfe von Redoxinitiatoren, erzeugt werden.

Bevorzugt sind radikalisch hergestellte Emulsionspfropfpolymerisate auf teilchenförmige, hochvernetzte Kautschuke (Dien- oder Alkylacrylatkautschuke) mit Gelgehalten > 80 Gew.-% und mittleren Teilchendurchmessern (d50) von 80 bis 800 nm.

Besonders geeignet sind technisch gebräuchliche ABS-Polymerisate.

Mischungen von Vinyl-Homopolymerisaten und/oder Vinyl-Copolymerisaten mit Pfropfpolymerisaten sind ebenfalls geeignet.

Bevorzugte andere Thermoplasten b) sind auch thermoplastische Polyurethane. Dies sind Reaktionsprodukte aus Diisocyanaten, ganz oder überwiegend aliphatischen Oligo-und/oder Polyestern und/oder -ethern sowie einem oder mehreren Kettenverlängerern. Diese thermoplastischen Polyurethane sind im wesentlichen linear und besitzen thermoplastische Verarbeitungscharakteristiken.

Die thermoplastischen Polyurethane sind bekannt oder können nach bekannten Verfahren (siehe beispielsweise US-A- 3 214 411, J.H. Saunders und K.C. Frisch, "Polyurethanes, Chemistry and Technology", Vol II, Seiten 299 bis 451, Interscience Publishers, New York, 1964 und Mobay Chemical Coporation, "A Processing Handbook for Texin Urethane Elastoplastic Materials", Pittsburgh, PA) hergestellt werden.

Ausgangsmaterialien zur Herstellung der Oligoester und Polyester sind beispielsweise Adipinsäure, Bernsteinsäure, Subecinsäure, Sebacinsure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Dimethyl-propylenglykol in Betracht. Darüberhinaus können gemeinsam mit den Glykolen kleine Mengen, bis zu 1 Mol-%, tri- oder höher funktionelle Alkohole, z.B. Trimethylolpropan, Glycerin, Hexantriol usw. eingesetzt werden.

Die resultierenden Hydroxyl-oligo-oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt vo ca. 0,01 bis 0,2 %.

Oligoester bzw. Polyester sind auch oligomere oder polymere Lactone, wie beispielsweise Oligocaprolacton oder Poly-caprolacton, und aliphatische Polycarbonate, wie beispielsweise Poly-butandiol-(1,4)-carbonat oder Poly-hexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 liegt.

Oligo- bzw. Polyether zur Herstellung der thermoplastischen Polyurethane sind beispielsweise solche auf Basis von Tetramethylenglykol, Propylenglykol und Ethylenglkyol.

Polyacetale sind ebenfalls als Polyether zu verstehen und einsetzbar.

Die Oligoether bzw. Polyether sollen mittlere Molekulargewichte $\overline{M}n$ (Zahlenmittel, ermittelt über die OH-Zahl der Produkte) von 600 bis 2000 vorzugsweise von 1000 bis 2000 haben.

Als organisches Diisocyanat wird zur Herstellung der Polyurethane vorzugsweise 4,4′-Diphenylmethan-diisocyanat verwendet. Es sollte weniger als 5 % 2,4′-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von c. 0,005 bis 0,2 % liegt. Die Acidität, gerechnet als % HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane verwendet werden, beispielsweise die Diisocyante des Ethylens, Ethylidens, Propylens, Butylens, Cyclopentylens-1,3,

Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4′-Diphenylens, das 2,2-Diphenylpropan-4,4′-diisocyanat, das Azobenzol-4,4′-diisocyanat, des Diphenylsulfon-4,4′-diisocyanat, das Dichlorhexanmethylen-diisocyanat, das Pentamethylen-diisocyanat, das Hexamethylen-diisocyanat, das 1-Chlorbenzol-2,4-diisocyanat, das Furfuryl-diisocyanat, das Dicyclohexylmethan-diisocyanat, das Isophorondiisocyanat, das Diphenylethan-diisocyanat und Bis(-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-β-hydroxy-ethylether, 1,3-Phenylen-bis-β-hydroxyethylether, Bis-(hydroxymethyl-cyclohexan), Hexandiol, Adipinsäure, ω-Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3′-Dichlorbenzidin, 3,3′-Dinitrobenzidin, Ethanolamin, Aminopropylalkohol, 2,2-Dimethyl-propanolamin, 3-Aminocyclohexylalkohol und p-Amiobenzylalkohol zu nennen. Das Molverhältnis Oligo- bzw. Polyester zu bifunktionellen Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane eingesetzt werden.

Die als Bausteine für die thermoplastischen Polyurethane genannten Diisocyanate, Oligoester, Polyester, Polyether, Kettenverlängerer und monofunktionellen Komponenten sind entweder literaturbekannt oder nach literaturbekannten Verfahren erhältlich.

Die bekannte Herstellung der Polyurethane kann beispielsweise wie folgt durchgeführt werden:

So können beispielsweise die Oligo- bzw. Polyester, die organischen Diisocyanate und die Kettenverlängerer für sich vorzugsweise auf eine Temperatur von ca. 50 bis 220 °C erhitzt und dann vermischt werden. Vorzugsweise werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verringern. Zur Erhöhung der Reaktionsgeschwindigkeit können geeignete Katalysatoren, wie z.B. tertiäre Amine, die in dem US-A- 2 729 618 genannt werden, zur Anwendung kommen.

Bevorzugte andere Thermoplasten sind auch sogenannte "LC-Polymere". Als LC-Polymere werden Polymere bezeichnet, die flüssigkristalline Schmelzen bilden können. Derartige Polymere, die auch als "thermotrop" bezeichnet werden, sind hinreichend bekannt (siehe beispielsweise EP-A- 0 131 846, EP-A- 0 132 637 und EP-A- 0 134 959).

In den genannten Literaturstellen ist weitere Literatur angezogen und darüber hinaus die Ermittlung des flüssigkristallinen Zustandes von Polymerschmelzen beschrieben.

"LC-Polymere" sind beispielsweise aromatische Polyester auf Basis von gegebenenfalls substituierter p-Hydroxybenzoesäure, gegebenenfalls substituierten Iso- und/oder Terephthalsäuren, 2,7-Dihydroxynaphthalin und anderen Diphenolen (EP-A- 0 131 846), aromatische Polyester auf Basis von gegebenenfalls substituierter p-Hydroxybenzoesäure, Diphenolen, Kohlensäure und gegebenenfalls aromatischen Dicarbonsäuren (EP-A- 0 132 637) und aromatischer Polyester auf Basis von gegebenenfalls substituierter p-Hydroxybenzoesäure, 3-Chlor-4-hydroxybenzoesäure, Isophthalsäure, Hydrochinon und 3,4′- und/oder 4,4′-Dihydroxydiphenyl, 3,4′- und/oder 4,4′-Dihydroxydiphenylether und/oder 3,4′- und/oder 4,4′-Dihydroxydiphenylsulfid (EP-A- 0 134 959).

Die LC-Polymere haben eine Persistenzlänge bei Zimmertemperatur zwischen 18 und 1300 Å, bevorzugt zwischen 25 und 300 Å, insbesondere zwischen 25 und 150 Å.

Die Persistenzlänge eines Polymeren bei Zimmertemperatur charakterisiert die mittlere Verknäuelung einer Molekülkette in einer verdünnten Lösung unter Theta-Bedingungen (vgl. z.B. P.J. Flory, "Principles of Polymer Chemistry", Cornell Univ. Press, Ithaca, New York) und die Hälfte der Kuhnschen Schrittlänge. Die

Persistenzlänge kann mit verschiedenen Methoden in verdünnten Lösungen bestimmt werden, z.B. durch Lichtstreuung und Röntgenkleinwinkel-Messungen. Man kann nach geeigneter Präparation die Persistenzlänge auch mit Hilfe der Neutronenkleinwinkelstreuung im Festkörper bestimmen. Weitere theoretische und experimentelle Methoden sind z.B. in J.H. Wendorff in "Liquid Crystalline Order in Polymers", e.g. A. Blumstein, Academic Press 1978, S. f16 ff sowie in den in "S.M. Aharoni, Macromolecules 19, (1986), S. 429 ff" angegebenen Referenzen beschrieben.

Bevorzugte Elastomere b3) für die Komponente b) zur Herstellung der erfindungsgemäßen Mischungen sind die vorstehend erwähnten Polyurethane, soweit sie elastischer Natur sind, Styrol, Butadien-Blockcopolymere, die teilweise hydriert sein können (beispielsweise Kraton G® der Shell), die vorstehend für die Pfropfpolymerisate erwähnten Kautschuke, die Pfropfpolymerisate selbst, soweit sie elastisch sind sowie elastische Polycarbonat-Polyether-Blockcopolymere.

Diese Elastomeren sind bekannt.

Die Folien, beziehungsweise Verbundfolien können flach, hohl, kugelförmig, schlauchförmig und hohlfaserförmig sein. Derartige Folien sind nach bekannten Verfahren durch Verformen, Tiefziehen, Blasen etc. erhältlich.

Die erfindungsgemäßen Folien, insbesondere die Verbundfolien, finden Verwendung beispielsweise für koch- und ofenfeste Verpackung oder für mikrowellenfeste Verpackungen, je nachdem, aus welcher Komponente b) die erfindungsgemäße Verbundfolie aufgebaut ist.

Die erfindungsgemäßen Verbundfolien können durch Coextrusion der thermoplastischen Kunststoffe mit den Polyethersulfonen hergestellt werden, Verbundfolien in einem Arbeitsgang erzeugt werden.

Die erfindungsgemäßen Folien aus Polyetherketonen und die erfindungsgemäßen Verbundfolien auf Basis dieser Folien aus den Polyetherketonen können als homogene Membranen, Kompositionsmembranen oder asymmetrische Membranen verwendet werden.

Beispiele:

1. Herstellung eines Bisphenols der Formel (A)

(A)

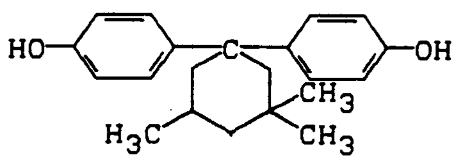

In einem 1-Liter-Rundkolben mit Rührer, Tropftrichter, Thermometer, Rückflußkühler und Gasleitungsrohr werden 7,5 Mol (705 g) Phenol und 0,15 Mol (30,3 g) Dodecanthiol und bei 28 bis 30 °C mit trockenem HCl-Gas gesättigt. Zu dieser Lösung werden bei 28 bis 30 °C innerhalb 3 Stunden eine Mischung von 1,5 Mol Dihydroisophoron (210 g) und 1,5 Mol (151 g) Phenol zugetropft, wobei weiterhin HCl-Gas durch die Reaktionslösung geleitet wird. Nach beendeter Zugabe werden weitere 5 Stunden HCl-Gas eingeleitet. Zur Vervollständigung der Reaktion läßt man 8 Stunden bei Raumtemperatur stehen. Anschließend wird überschüssiges Phenol durch Wasserdampf-Destillation entfernt. Der verbleibende Rückstand wird zweimal mit je 500 ml Petrolether (60-90) und einmal mit 500 ml Methylenchlorid heiß extrahiert und abfiltriert. Ausbeute: 370 g entspricht 79 %. Schmelzpunkt: 205-207 °C.

2. Herstellung erfindungsgemäßer Polyetherketone

Beispiel 2a

In einer mit Stickstoff gespülten Rührapparatur, die mit einem Wasserabscheider versehen ist, werden 31,04 g (0,1 Mol) des Bisphenols der Formel (A), 21,82 g 4,4′-Difluorbenzophenon, 200 ml N-Methylpyrrolidon, 100 ml Toluol und 18 g Kaliumcarbonat vorgelegt. Es wird destillativ azeotrop entwässert, bis der Ansatz wasserfrei ist. Durch Abdestillieren von Toluol wird die Sumpftemperatur innerhalb einer Stunde auf 180 °C erhöht. Der Ansatz wird 4 h bei 180 °C gerührt und anschließend für 1 h auf 190-195 °C aufgeheizt. Danach wird mit 200 ml N-Methylpyrrolidon verdünnt und heiß abgesaugt. Das Filtrat wird mit Essigsäure neutralisiert und das Polymer durch Fällung in einer Methanol-Wasser-Mischung (1:1) daraus isoliert. Zur weiteren Reinigung wird das Polymer in Methylenchlorid gelöst und anschließend in Methanol gefällt. Abschließend wird 14 h bei 120 °C im Vakuum getrocknet. Ausbeute: 37,6 g; relative Viskosität

gemessen in Methylenchlorid bei 25 °C und einer Polymerkonzentration von 5 g pro Liter: 1,297, Glastemperatur, bestimmt mit Hilfe der DSC-Methode bei einer Aufheizgeschwindigkeit von 20 K/min: 225 °C.

Mit Hilfe der sogenannten Thermomechanischen Analyse (TMA) wurde das Erweichungsverhalten der Probe bei einer Aufheizrate von 1 K/min. durch das Eindringverhalten eines kreisrunden Stempels (Durchmesser 1 mm) und einer aufliegenden Last von 20 Pond bestimmt. Erst oberhalb 235 °C drang der Stempel signifikant in die Probe ein.

Zugfestigkeit, gemessen wie in Vergleichsbeispiel 3 a, jedoch nach Verpressen bei 280 °C : 68 MPa.

Beispiel 2b:

In einer Rührapparatur entsprechend Beispiel 2a werden nach dem gleichen Verfahren wie in Beispiel 2a 15,52 g (0,05 Mol) des Bisphenols der Formel (A), 11,4 g Bisphenol A (2,2-Bis-(4-hydroxyphenyl)-propan; 0,05 Mol), 21,82 g 4,4′-Difluorbenzophenon, 200 ml N-Methylpyrrolidon, 100 ml Toluol und 18 g Kaliumcarbonat miteinander umgesetzt. Nach Aufarbeitung wie in Beispiel 2a wurde ein Polyetherketon mit einer relativen Lösungsviskosität von 1.463, gemessen wie in Beispiel 2a, isoliert. Die Glastemperatur betrug - gemessen wie in Beispiel 2a -189 °C. Aus der TMA-Analyse analog Beispiel 2a ergab sich ein signifikantes Endringen des TMA-Stempels erst ab 195 °C.

Beispiel 2c:

Entsprechend Beispiel 2a wurde aus 232,82 g des Bisphenols der Formel (A), 130,92 g 4,4′-Difluorbenzophenon, 1.200 ml N-Methylpyrrolidon, 600 ml Toluol und 135 g Kaliumcarbonat ein Polyetherketon-Segment mit OH-Endgruppen hergestellt (Ausbeute 177,2 g). Molekulargewicht, dampfdrukkosmometrisch in Methylenchlorid bestimmt: 1.600 g/mol, relative Lösungsviskosität analog Beispiel 2a bestimmt: 1.052, OH-Gehalt: 1,8 Gew.-%.

Beispiel 2d:

Entsprechend Beispiel 2a wurden 52,77 g des Bisphenols der Formel (A), 46,48 g 4,4′-Difluorbenzophenon, 340 ml N-Methylpyrrolidon, 220 ml Toluol und 30,6 g Kaliumcarbonat miteinander umgesetzt. Anschließend wurden 9,38 g 4,4′-Difluorbenzophenon zugegeben und eine weitere Stunde bei 190 °C gerührt. Nach Aufarbeitung entsprechend Beispiel 2a wurden 46,7 g eines Polyetherketon-Segments mit F-Endgruppen isoliert. Molekulargewicht, bestimmt analog Beispiel 2a, betrug 2.500 g/mol, relative Lösungsviskosität 1.051, Fluor-Gehalt 1,3 Gew.-%.

Beispiel 2e:

Entsprechend Beispiel 2a wurden 31,04 g des Bisphenols der Formel (A), 21,82 g 4,4′-Difluorbenzophenon, 200 ml N-Methylcaprolactam, 100 ml Toluol und 18 g Kaliumcarbonat miteinander umgesetzt. Entsprechend Beispiel 2 a wurden 38,4 g Polyetherketon isoliert. Relative Lösungsviskosität analog Beispiel 2a: 1.383, Glastemperatur nach DSC analog Beispiel 2a: 218 °C. Die TMA-Analyse, analog Beispiel 2a, ergab ein signifikantes Eindringen des TMA-Stempels in die Probe erst ab 230 °C.

Beispiel 2f:

Entsprechend Beispiel 2a wurden 31,04 g des Bisphenols der Formel (A), 25,11 g 4,4′-Difluorbenzophenon, 200 ml N-Methylcaprolactam, 100 ml Toluol und 18 g Kaliumcarbonat miteinander umgesetzt. Anschließend wurde eine weitere Stunde bei 210 °C, danach noch eine Stunde bei 230 °C gerührt. Nach Aufarbeitung entsprechend Beispiel 2a wurden 36,2 g Polyetherketon isoliert. Relative Lösungsviskosiät - analog Beispiel 2a bestimmt - betrug 1.084.

Beispiel 2g:

Entsprechend Beispiel 2a wurden 403,52 g des Bisphenols der Formel (A), 280,83 g 4,4′-Difluorbenzophenon, 2600 ml N-Methylpyrrolidon, 1300 ml Toluol und 234 g Kaliumcarbonat miteinander umgesetzt. Anschließend wurde 6,57 g 4-Chlordiphenylsulfon als Kettenabbrecher zugegeben und eine weitere Stunde bei 190 °C gerührt. Nach Aufarbeitung entsprechend Beispiel 2a wurden 411 g Polyetherketon isoliert. Relative Lösungsviskosität analog Beispiel 2a gemessen: 1.318, Glastemperatur, analog Beispiel 2a gemessen: 217 °C. Die TMA-Analyse ergab - analog Beispiel 2a - einen Eindringpunkt von etwas 228 °C.

3. Vergleichsbeispiele

Analog Beispiel 2a wurden aus den Diphenolen (B), (C) und (D) Polyetherketone hergestellt. Die Werte wurden wie für Beispiel 2a ermittelt.

3 a) Polyetherketon aus dem Bisphenol der Formel (B)

(B) 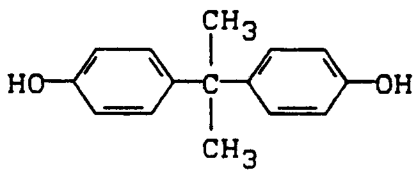

Glastemperatur: 158 °C. Das Material wurde bei 220 °C nach 5-minütiger Temperung unter einem Druck von 200 bar in ein Formteil "S 2-Zugstab" gepreßt. Bei einer Abzugsgeschwindigkeit von 2 mm/min wurde die Zugfestigkeit bei Raumtemperatur gemessen: 55 MPa.

3 b) Polyetherketon aus dem Bisphenol der Formel (C)

(C) 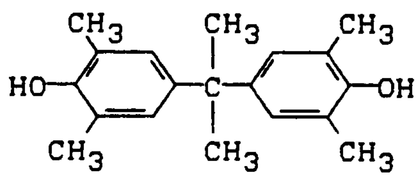

Glastemperatur: 210 °C, Zugfestigkeit gemessen wie in Beispiel 3 a, jedoch bei 260 °C verpresst : 40 MPa.

3 c) Polyetherketon aus dem Bisphenol der Formel (D)

(D) 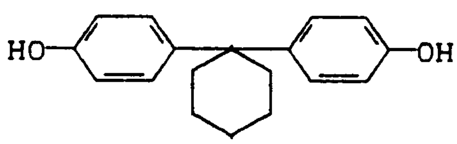

Glastemperatur 175 °C, relative Viskosität (gemessen wie für Beispiel 2a): 1,374.

4. Das Polyetherketon 2a) wurde nach 5-minütiger Temperung bei 220 °C bei einer Temperatur von 260 °C unter Anwendung eines Druckes von 260 bar zu einer Folie einer Dicke von 540 µm verpreßt. Von einem homogen aussehenden runden Folienteil der Gesamtfläche von etwa 4 $cm^2$ wurde nach 2 stündiger Lagerung (im Vakuum bei 100 °C) die Permeabilität für Sauerstoff, Kohlendioxid, Methan und Stickstoff gemessen. Als Detektoren wurden Druckmeßkondensatoren verwendet. Die Permeabilität (P) wurde in Einheiten

$$\frac{cm^3 \cdot mm}{m^2 \cdot 24h \cdot 10^5 Pa}$$

bar gemessen (Temperatur = 23 °C).

Ergebnis:

P(Sauerstoff) = 118.3
P(Stickstoff) = 31.1
P(Kohlendioxid) = 610.6
P(Methan) = 31.3

5. Vergleichsbeispiel:

<u>Beispiel 5a)</u>

Analog 4 wurde eine Folie aus dem nichterfindungsgemäßen Polyetherketon Vergleichsbeispiel 3a hergestellt und die Permeabilität gemessen (Foliendicke: ca. 100 µm):
Permeabilität für Sauerstoff: 44,0
Permeabilität für Kohlendioxid: 193,5
Oberhalb etwa 165 °C war die Folie nicht mehr formstabil.

<u>Beispiel 5b:</u>

Aus Polycarbonat auf Basis des Bisphenol A mit einer in Methylenchlorid bei 25 °C (5g/l Polymerkonzentration) gemessenen relativen Lösungsviskosität von 1.28, Glastemperatur 146 °C, gemessen mit der DSC-Methode, wurde nach Lösen in 100 ml Methylenchlorid und Eindicken dieser Lösung durch Teilverdampfen des Lösungsmittels eine Folie durch Ausgießen der eingedickten Lösung auf einer Glasplate erhalten mit einer Dicke von 154 µm.

Anschließend wurde nach Trocknen der Folie (2 Stunden bei 100 °C im Vakuum) von dieser Folie - wie unter 3. - die Permeabilität gemessen (Zimmertemperatur).
Ergebnis:
P(Sauerstoff) = 72,0
P($CO_2$) = 366,0
Die Folie was oberhalb 150 °C nicht mehr formstabil.

6. Herstellung einer erfindungsgemäßen Verbundfolie:

Die Folien nach dem erfindungsgemäßen Beispiel 4. und dem nichterfindungsgemäßen Beispiel 5. wurden bei 160 °C unter Anwendung eines Druckes von 200 bar nach 3minütiger Temperung 2 Minuten lang zu einer Verbundfolie mit einer Dicke von 510 µm verpreßt. Von dieser Verbundfolie wurde die Permeabilität - wie in Beispiel 4. beschrieben - gemessen (Temperatur = Zimmertemperatur):
Ergebnis:
P(Sauerstoff) = 110,3
P($CO_2$) = 560,3
Die Folie war auch bei 180 °C noch formstabil.

## Patentansprüche

**1.** Aromatische Polyetherketone mit der wiederkehrenden Struktureinheit

-O-E-O-E'- (VII)

worin -E'- ein zweibindiger Rest eines aromatischen Ketons (VIII a) ist.

$$-Ar-\underset{\underset{O}{\|}}{C}-Ar'- \qquad (VIIIa)$$

mit -Ar- und Ar′ gleiche oder verschiedene difunktionelle aromatische Rest mit 6 bis 50 C-Atomen, und worin -O-E-O- (IX a) ein zweibindiger Diphenolat-Rest, ist dadurch gekennzeichnet, daß von 0,1 Mol% bis 100 Mol% der Diphenolat-Reste (IX a) solche der Formel Ia sind

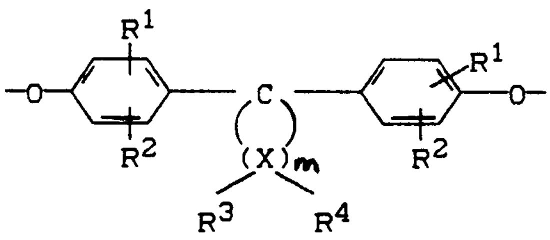

(I a)

worin

R[1] und R[2] unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

R[3] und R[4], für jedes X individuell wählbar, unabhängig voneinander Wasserstoff oder $C_1$-$C_6$-Alkyl,

und

X Kohlenstoff bedeuten,

mit der Maßgabe, daß an mindestens einem Atom X $R^3$ und $R^4$ gleichzeitig Alkyl bedeuten.

**2.** Aromatische Polyetherketone gemäß Anspruch 1 mit einem mittleren Molekulargewicht $\overline{M}_w$ von 742 bis 500.000.

**3.** Aromatische Polyetherketone gemäß Anspruch 1, dadurch gekennzeichnet, daß von 3 Mol% bis 100 Mol% der Diphenolat-Reste (IX a) Diphenolat-Reste der Formel (I a) sind.

**4.** Aromatische Polyetherketone gemäß Anspruch 1, dadurch gekennzeichnet, daß von 10 Mol% bis 100 Mol% der Diphenolat-Reste (IX a) Diphenolat-Reste der Formel (I a) sind.

**5.** Verfahren zur Herstellung der Polyetherketone des Anspruchs 1, durch Umsetzung von Dialkalidiphenolaten mit Dihalogen-diaryl-Ketonen (VIII)

$$\text{Hal-Ar-}\underset{\underset{O}{\|}}{C}\text{-Ar'-Hal} \qquad (VIII),$$

worin -Ar- und -Ar'- gleiche oder verschiedene difunktionelle aromatische Reste mit 6 bis 50 C-Atomen und Hal Halogen wie Fluor, Chlor, Brom bedeuten, dadurch gekennzeichnet, daß von 0,1 Mol% bis 100 Mol% der Dialkalidiphenolate solche der Formel (I b)

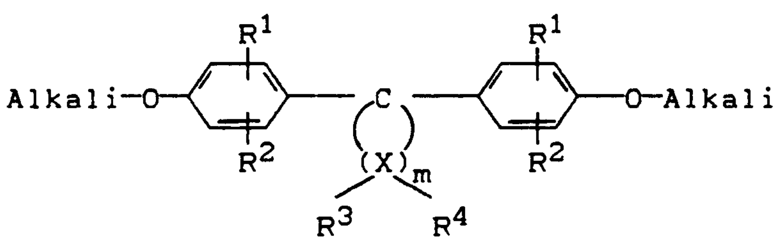

(I b)

sind,

worin X, R[1], R[2], R[3], R[4] und m die für Formel I in Anspruch 1 genannte Bedeutung haben, und daß die Umsetzung in polaren Lösungsmitteln wie N-alkylierten Caprolactamen oder N-alkylierten Pyrrolidonen durchgeführt wird.

**6.** Verwendung von Diphenolen der Formel (I)

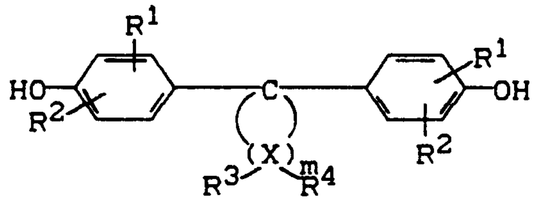

(I),

worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl, |
| m | eine ganze Zahl von 4 bis 7, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten, zur Herstellung von aromatischen Polyetherketonen.

**7.** Folien einer Dicke von 1-1500 μm aus Polyetherketonen auf Basis von Diphenolen der Formel (I)

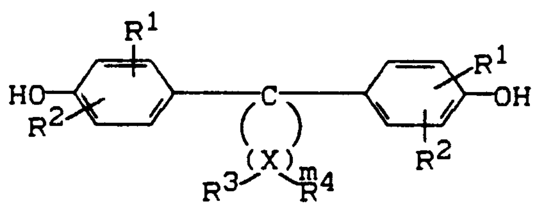

(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl, |
| m | eine ganze Zahl von 4 bis 7, bevorzugt 4 oder 5 |
| $R^3$ und $R^4$ | für jedes X individuell wählbar, unabhängig voneinander Wasserstoff, oder $C_1$-$C_6$-Alkyl und |
| X | Kohlenstoff bedeuten, |

mit der Maßgabe, daß an mindestens einem Atom X $R^3$ und $R^4$ gleichzeitig Alkyl sind.

**8.** Folien nach Anspruch 7, die mono- oder biaxial im Verhältnis 1 : 1,5 bis 1 : 5,0 gereckt sind.

**9.** Verbundfolien aus einer Folie gemäß Anspruch 7 und einer Folie aus einem anderen Kunststoff.

**10.** Verwendung der Folien gemäß Anspruch 7 als Membranen für die Gaspermeation.

## Claims

**1.** Aromatic polyether ketones having the recurrent structural unit

-O-E-O-E'- (VII)

wherein E' is a divalent radical of an aromatic ketone (VIII a)

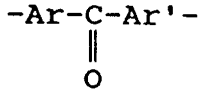

(VIIIa)

wherein Ar and Ar' are identical or different difunctional aromatic radicals having from 6 to 50 carbon atoms,
and wherein -O-E-O- (IX a) is a divalent diphenolate group, characterized in that from 0.1 mol-% to 100 mol-% of the diphenolate radicals (IX a) correspond to the following formula Ia

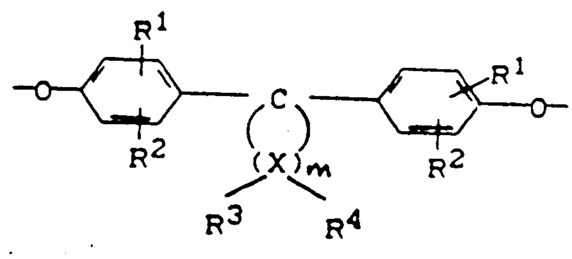

(I a)

wherein

| | |
|---|---|
| $R^1$ and $R^2$ | denote, independently of one another, hydrogen, halogen, $C_1$-$C_8$-alkyl, $C_5$-$C_6$-cycloalkyl, $C_6$-$C_{10}$-aryl or $C_7$-$C_{12}$-aralkyl, |
| m | represents an integer from 4 to 7, |
| $R^3$ and $R^4$, | which may be selected individually for each X, denote, independently of one another, hydrogen or $C_1$-$C_6$-alkyl, and |
| X | denotes carbon |

under the proviso that on at least one X atom, $R^3$ and $R^4$ are both alkyl.

**2.** Aromatic polyether ketones according to Claim 1 having an average molecular weight $M_w$ of from 742 to 500,000.

**3.** Aromatic polyether ketones according to Claim 1, characterized in that from 3 mol-% to 100 mol-% of the diphenolate radicals (IX a) are diphenolate radicals corresponding to formula (I a).

**4.** Aromatic polyether ketones according to Claim 1, characterized in that from 10 mol-% to 100 mol-% of the diphenolate radicals (IX a) are diphenolate radicals corresponding to formula (I a).

**5.** A process for the preparation of the polyether ketones according to Claim 1 by the reaction of dialkali metal diphenolates with dihalogeno-diaryl ketones (VIII)

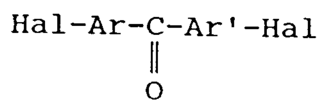

(VIII)

wherein Ar and Ar' denote identical or different difunctional aromatic radicals having from 6 to 50 carbon atoms and Hal stands for a halogen such as fluorine, chlorine or bromine, characterized in that from 0.1 mol-% to 100 mol-% of the dialkali metal diphenolates correspond to formula (I b)

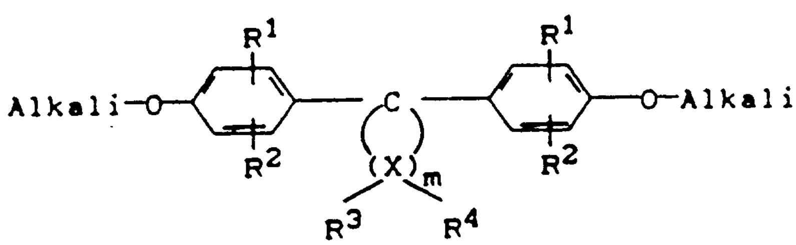

(I b)

wherein X, $R^1$, $R^2$, $R^3$, $R^4$ and m have the meanings indicated for formula I in Claim 1 and in that the reaction is carried out in polar solvents such as N-alkylated caprolactams or N-alkylated pyrrolidones.

**6.** Use of diphenols corresponding to formula (I)

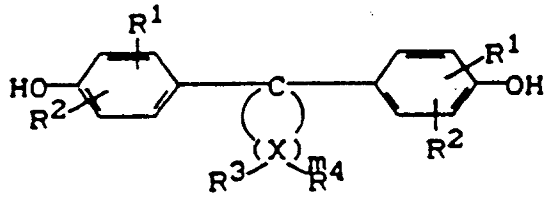 (I),

wherein

| | |
|---|---|
| $R^1$ and $R^2$ | denote, independently of one another, hydrogen, halogen, $C_1$-$C_8$-alkyl, $C_5$-$C_6$-cycloalkyl, $C_6$-$C_{10}$-aryl or $C_7$-$C_{12}$-aralkyl, |
| m | stands for an integer of from 4 to 7, |
| $R^3$ and $R^4$, | which may be selected individually for each X, denote, independently of one another, hydrogen or $C_1$-$C_6$-alkyl, and |
| X | stands for carbon |

under the proviso that on at least one X atom, $R^3$ and $R^4$ are both alkyl, for the preparation of aromatic polyether ketones.

**7.** Films having a thickness of from 1-1500 µm consisting of polyether ketones based on diphenols corresponding to formula (I)

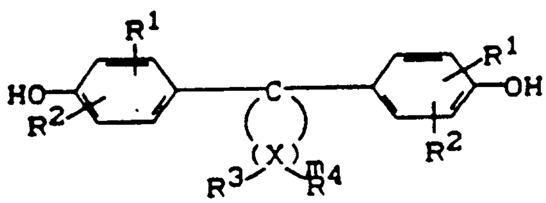 (I)

wherein

| | |
|---|---|
| $R^1$ and $R^2$ | denote, independently of one another, hydrogen, halogen, preferably chlorine or bromine, $C_1$-$C_8$-alkyl, $C_5$-$C_6$-cycloalkyl, $C_6$-$C_{10}$-aryl or $C_7$-$C_{12}$-aralkyl, |
| m | stands for an integer from 4 to 7, preferably 4 or 5, |
| $R^3$ and $R^4$, | which may be selected individually for each X, denote, independently of one another, hydrogen or $C_1$-$C_6$-alkyl and |
| X | denotes carbon under the proviso that on at least one X atom, $R^3$ and $R^4$ are both alkyl. |

**8.** Films according to Claim 7, which are stretched mono- or biaxially in a ratio of from 1 : 1.5 to 1 : 5.0.

**9.** Composite films obtained from a film according to Claim 7 and a film of some other synthetic resin.

**10.** Use of the films according to Claim 7 as membranes for gas permeation.

**Revendications**

**1.** Polyéthercetones aromatiques à motif structural récurrent

-O-E-O-E'- (VII)

dans lequel -E'- est un reste à deux liaisons d'une cétone aromatique (VIIIa)

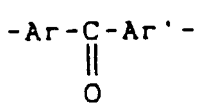 (VIIIa)

où -Ar- et Ar' représentent des restes aromatiques difonctionnels identiques ou différents ayant 6 à 50 atomes de carbone,
et dans lequel -O-E-O- (IXa) désigne un reste diphénolate à deux liaisons, caractérisées en ce qu'une proportion de 0,1 mole % à 100 moles % des restes diphénolate (IXa) représente les restes de formule la

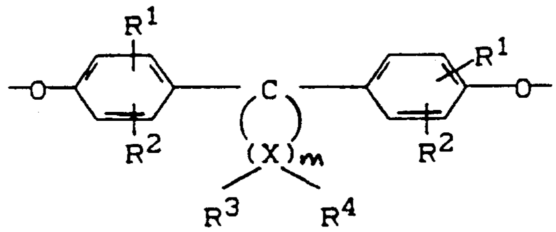

(I a)

dans laquelle

- $R^1$ et $R^2$ représentent indépendamment l'un de l'autre l'hydrogène, un halogène, un groupe alkyle en $C_1$ à $C_8$, cycloalkyle en $C_5$ ou $C_6$, aryle en $C_6$ à $C_{10}$ et aralkyle en $C_7$ à $C_{12}$,
- m est un nombre entier de 4 à 7,
- $R^3$ et $R^4$, pouvant être choisis individuellement pour chaque X, représentent indépendamment l'un de l'autre l'hydrogène ou un groupe alkyle en $C_1$ à $C_6$,
  et
- X est le carbone,

sous réserve que sur au moins un atome X, $R^3$ et $R^4$ désignent en même temps un groupe alkyle.

**2.** Polyéthercétones aromatiques suivant la revendication 1, ayant un poids moléculaire moyen $\overline{M}_p$ de 742 à 500 000.

**3.** Polyéthercétones aromatiques suivant la revendication 1, caractérisées en ce qu'une porportion de 3 à 100 modes % des restes diphénolate (IXa) représente des restes diphénolate de formule (Ia).

**4.** Polyéthercétones aromatiques suivant la revendication 1, caractérisées en ce qu'une porportion de 10 à 100 moles % des restes diphénolate (IXa) représente des restes diphénodate de formule (Ia).

**5.** Procédé de production des polyéthercétones suivant la revendication 1, par réaction de diphénolates dialcadins avec des dihalogéodiarylcétones (VIII)

$$Hal-Ar-\underset{\underset{O}{\|}}{C}-Ar'-Hal \qquad (VIII),$$

où -Ar- et -Ar'- sont des restes aromatiques difonctionnels identiques ou différents ayant 6 à 50 atomes de carbone et Hal est un halogène tel que le fluor, le chlore ou le brome, caractérisé en ce qu'une proportion de 0,1 à 100 moles des diphénolates dialcalins représente des diphénolates de formule (Ib)

Métal alcalin 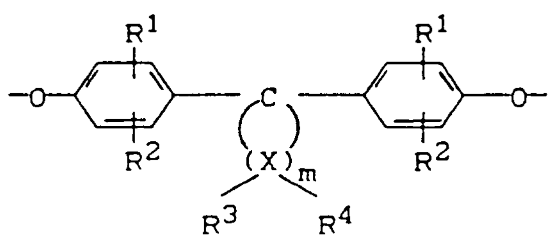 Métal alcalin (Ib)

dans laquelle
X, $R^1$, $R^2$, $R^3$, $R^4$ et m ont la définition indiquée pour la formule I dans la revendication 1, et en ce que

la réaction est conduite dans des solvants polaires tels que des caprolactames N-alkylés ou des pyrrolidones N-alkylées.

6. Utilisation de diphénols de formule (I)

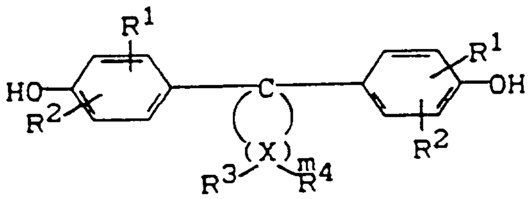

(I),

dans laquelle

$R^1$ et $R^2$ représentent indépendamment l'un de l'autre l'hydrogène, un halogène, un groupe alkyle en $C_1$ à $C_8$, cycloalkyle en $C_5$ ou $C_6$, aryle en $C_6$ à $C_{10}$ et aralkyle en $C_7$ à $C_{12}$,

m est un nombre entier de 4 à 7,

$R^3$ et $R^4$, pouvant être choisis individuellement pour chaque X, représentent indépendamment l'un de l'autre l'hydrogène ou un groupe alkyle en $C_1$ à $C_6$

et

X représente le carbone,

sous réserve que, sur au moins un atome X, $R^3$ et $R^4$ représentent en même temps un groupe alkyle, pour la production de polyéthercétones aromatiques.

7. Feuilles d'une épaisseur de 1 à 1500 µm en polyéthercétones à base de diphénols de formule (I)

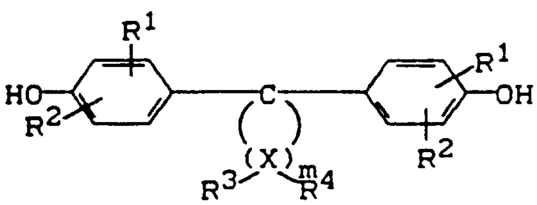

(I),

dans laquelle

$R^1$ et $R^2$ représentent indépendamment l'un de l'autre l'hydrogène, un halogène, de préférence le chlore ou le brome, un groupe alkyle en $C_1$ à $C_8$, cycloalkyle en $C_5$ ou $C_6$, aryle en $C_6$ à $C_{10}$ et aralkyle en $C_7$ à $C_{12}$,

m est un nombre entier de 4 à 7, de préférence 4 ou 5

$R^3$ et $R^4$ pouvant être choisis individuellement pour chaque X, représentent indépendamment l'un de l'autre l'hydrogène ou un groupe alkyle en $C_1$ à $C_6$ et

X désigne le carbone,

sous réserve que $R^3$ et $R^4$ représentent en même temps des groupes alkyle sur au moins un atome X.

8. Feuilles suivant la revendication 7, qui sont étirées mono-axialement ou bi-axialement dans le rapport de 1:1,5 à 1:5,0.

9. Feuilles composites constituées d'une feuille suivant la revendication 7 et d'une feuille en une autre matière plastique.

10. Utilisation des feuilles suivant la revendication 7 comme membranes pour la perméation de gaz.